# EUROPÄISCHE PATENTSCHRIFT

(11) **EP 2 725 688 B1**
(45) Veröffentlichungstag und Bekanntmachung des Hinweises auf die Patenterteilung: **18.01.2017**
(21) Anmeldenummer: 12190107.8
(22) Anmeldetag: 26.10.2012
(51) Int. Cl.: H02K 1/27, H02K 15/03

(54) **Rotor für einen Elektromotor**
Rotor for an electric motor
Rotor pour un moteur électrique

(43) Veröffentlichungstag der Anmeldung: 30.04.2014
(73) Patentinhaber: Grundfos Holding A/S, 8850 Bjerringbro (DK)
(72) Erfinder: Vad, Martin, 8930 Randers NØ (DK)
(74) Vertreter: Patentanwälte Vollmann & Hemmer

(56) Entgegenhaltungen:
- EP-A1- 2 390 986
- EP-A1- 2 511 532
- JP-A- 2005 065 370
- US-A1- 2008 315 691
- US-A1- 2010 066 189

## Beschreibung

Die Erfindung betrifft einen Rotor für einen Elektromotor mit den im Oberbegriff des Anspruchs 1 angegebenen Merkmalen, sowie einen Elektromotor mit einem solchen Rotor, ein Pumpenaggregat mit einem solchen Elektromotor und ein Verfahren zum Herstellen eines solchen Rotors.

Bei Elektromotoren mit Permanentmagnetrotor ist es erforderlich, in dem Rotor Permanentmagnete anzuordnen. Dazu ist es beispielsweise bekannt, einen Rotorkörper aus Eisenblechen auszubilden und Permanentmagnete in Ausnehmungen in den Eisenblechen einzusetzen. Auch ist es bekannt, den Rotorkörper aus einem permanent magnetisierbaren Material auszubilden und die Elektromagnete in dem Rotorkörper durch Magnetisierung auszubilden. Der Rotorkörper ist in der Regel drehfest mit einer zentralen Rotorwelle verbunden.

JP 2005 065370 A offenbart einen Rotor für einen Elektromotor, welcher aus einem äußerem Mantel mit einem darin eingepressten bzw. eingegossenen Magnetring aufweist, wobei der Magnetring den äußeren Mantel und eine im Inneren gelegene Welle miteinander verbindet. Bei dieser Ausgestaltung kann die Rotorwelle im Inneren als Rückschlusskörper für den Magnetring fungieren. Dies erfordert es jedoch, dass die Welle aus weichmagnetischem Material gefertigt ist. Falls die Welle nicht aus weichmagnetischem Material gefertigt ist, ist ein weichmagnetischer Rotorkörper zu verwenden, wobei sich das Problem stellt, diesen mit der Rotorwelle zu verbinden.

Es ist Aufgabe der Erfindung, einen Rotor für einen Elektromotor dahingehend zu verbessern, dass er einfacher zu fertigen ist.

Diese Aufgabe wird durch einen Rotor für einen Elektromotor mit den in Anspruch 1 angegebenen Merkmalen, durch einen Elektromotor mit den in Anspruch 12 angegebenen Merkmalen sowie durch ein Verfahren zum Herstellen eines solchen Rotors mit den in Anspruch 14 angegebenen Merkmalen gelöst. Der erfindungsgemäße Rotor kann besonders bevorzugt in einem Elektromotor, welcher als Antriebsmotor eines Pumpenaggregates dient, zum Einsatz kommen. Ein solches Pumpenaggregat ist im Anspruch 13 definiert.

Bevorzugte Ausführungsformen ergeben sich aus den Unteransprüchen, der nachfolgenden Beschreibung sowie den beigefügten Figuren.

Der erfindungsgemäße Rotor für einen Elektromotor weist in bekannter Weise eine zentrale Rotorwelle auf, an welcher ein permanentmagnetischer Rotorkörper befestigt ist. D. h. der Rotorkörper weist permanentmagnetische Magnetpole auf. Erfindungsgemäß ist der Rotorkörper aus einem Kunststoffmaterial gefertigt. Der Rotorkörper weist dazu einen radial von der Rotorwelle beabstandeten Mantel auf. Dieser Mantel ist so angeordnet, dass zwischen der Rotorwelle und dem Innenumfang des Mantels ein direkt an den Innenumfang des Mantels angrenzender erster Ringraum ausgebildet ist. Dieser ist mit einem Kunststoff derart ausgegossen, dass der Kunststoff direkt an den Mantel angegossen ist. Der Kunststoff liegt somit direkt am Innenumfang des Mantels an und stellt so eine Verbindung zu dem Mantel her. Dabei kommt es zu einer formschlüssigen und/oder stoffschlüssigen Verbindung zwischen dem Kunststoff und dem Mantel Der Kunststoff bildet ferner gleichzeitig den Rotorkörper. Dazu sind in den Kunststoff Magnetpartikel eingebettet, welche dafür sorgen, dass der Rotorkörper die gewünschten permanentmagnetischen Eigenschaften aufweist. Es handelt sich dabei bevorzugt um Magnetpartikel, welche von außen magnetisierbar sind und dann die durch Magnetisierung erzeugten, permanentmagnetischen Eigenschaften beibehalten. So kann der Rotor auf sehr einfache Weise ausgebildet werden, indem dem Kunststoff vor dem Spritzgießen die Magnetpartikel zugesetzt werden und durch Gießen bzw. Spritzgießen dann zum einen der Rotorkörper ausgeformt wird und gleichzeitig die Verbindung mit dem umgebenden Mantel wird. Die definierte Magnetisierung zur Ausbildung von Magnetpolen kann dann nachfolgend erfolgen.

Der Mantel ist bevorzugt so ausgebildet, dass er durch das Eingießen des Kunststoffes, welches vorzugsweise im Spritzguss unter Druck erfolgt, elastisch und/oder plastisch verformt wird. Durch die elastische Verformung kann eine Vorspannung erzeugt werden, welche einen radial nach innen gerichteten Druck auf das Kunststoffmaterial auswirkt und so dafür Sorge trägt, dass der Rotorkörper zusammengehalten wird. So kann durch die Elastizität eine Schrumpfung des Kunststoffes beim Erkalten ausgeglichen werden, so dass auch bei Schrumpfung eine sichere Anlage des Mantels an dem Kunststoff und ggf. eine sichere Anlage des Kunststoffes an der Rotorwelle sichergestellt ist.

Der Mantel ist vorzugsweise aus Metall, insbesondere aus rostfreiem Stahl gefertigt. Der Mantel umgibt den aus dem Kunststoff geformten Rotorkörper außenumfänglich und kann Teil einer Einkapselung des Kunststoffes mit den Magnetpartikeln bilden. Dies ist insbesondere bei nasslaufenden Elektromotoren, wie sie in Pumpenaggregaten zum Einsatz kommen, von Vorteil, da durch eine solche Einkapselung die Magnetpartikel vor Korrosion geschützt werden können.

Der Mantel weist zur Einkapselung vorzugsweise eine geschlossene Umfangsfläche auf.

Die Rotorwelle ist von einem weichmagnetischen Ring, insbesondere in Form eines Eisenringes, umgeben und der erste Ringraum ist zwischen dem Außenumfang des weichmagnetischen Ringes und dem Mantel ausgebildet. Der weichmagnetische Ring dient dazu, den magnetischen Kreis im Rotor zu schließen, so dass z. B. auch eine Rotorwelle aus einem nicht magnetischen Material Verwendung finden kann. Das Kunststoffmaterial mit den Magnetpartikeln, welches den permanentmagnetischen Rotorkörper ausbildet, wird dabei zwischen dem Außenumfang dieses weichmagnetischen Ringes und dem Innenumfang des Mantels eingegossen, so dass es an den Ring und den Mantel angegossen ist und eine feste Verbindung zwischen dem Ring und dem Mantel herstellt.

Der weichmagnetische Ring ist weiter so ausgebildet, dass er radial beabstandet zu der Rotorwelle angeordnet ist. D. h. zwischen dem weichmagnetischen Ring und dem Außenumfang der Rotorwelle ist ein zweiter Ringraum ausgebildet. Dieser ist ebenfalls mit einem Kunststoff ausgegossen. Der Kunststoff ist an den Ring und die Rotorwelle angegossen und liegt am Außenumfang der Rotorwelle und am Innenumfang des weichmagnetischen Ringes an und verbindet diese form- und/oder stoffschlüssig fest miteinander. Bei diesem Kunststoff handelt es sich weiter bevorzugt um einen Kunststoff, dem keine Magnetpartikel zugesetzt sind.

Zumindest der erste Ringraum des Rotorkörpers, welcher an den umgebenden Mantel angrenzt, ist bevorzugt an zumindest einer Axialseite, weiter bevorzugt an beiden Axialseiten, von einer Deckscheibe überdeckt. Die Deckscheibe bildet so vorzugsweise gemeinsam mit dem Mantel eine Einkapselung des Kunststoffes mit den Magnetpartikeln, so dass die Magnetpartikel in einem geschlossenen Raum angeordnet sind und so vor Feuchtigkeit geschützt sind. Dies dient dem Korrosionsschutz, was insbesondere bei Verwendung des Rotors in einem nasslaufenden Elektromotor von Vorteil ist.

Die zumindest eine Deckscheibe ist bevorzugt aus Metall gefertigt. Sofern zwei Deckscheiben vorhanden sind, sind vorzugsweise beide Deckscheiben aus Metall gefertigt. Besonders bevorzugt handelt es sich bei dem Metall um rostfreien Stahl.

Die zumindest eine Deckscheibe kann mit dem Mantel und/oder einem die Rotorwelle umgebenden weichmagnetischen Ring verbunden, insbesondere verschweißt sein. So kann der Mantel mit den an beiden Axialenden angeordneten Deckscheiben und dem radial innenliegenden weichmagnetischen Ring eine dichte Einkapselung für den Kunststoff mit den Magnetpartikeln bilden. Alternativ könnten die Deckscheiben am Innenumfang auch direkt mit der Rotorwelle verbunden sein, z. B. wenn kein weichmagnetischer Ring vorhanden ist.

Die Magnetpartikel enthalten vorzugsweise Neodym und/oder Ferrit bzw. sind vollständig aus Neodym oder Ferrit gebildet. Die Verwendung von Neodym ermöglicht die Erzeugung starker magnetischer Felder bei gleichzeitig kompaktem Aufbau.

Die Rotorwelle ist vorzugsweise aus Keramik gefertigt. Dies hat den Vorteil, dass auf Lagerelemente bzw. Lagereinsätze verzichtet werden kann, da die Rotorwelle selber die erforderlichen Lagereigenschaften aufweist und so direkt in einem umgebenden Lagerring gleitend zur Anlage kommen kann. Bei der Verwendung einer Rotorwelle aus Keramik hat der oben beschriebene innere Ring aus weichmagnetischem Material den Vorteil, dass er den magnetischen Fluss im Rotor sicherstellt, wenn die Rotorwelle selber keine weichmagnetischen Eigenschaften hat.

Gemäß einer weiteren bevorzugten Ausführungsform sind am Außenumfang der Rotorwelle, am Innenumfang des Mantels und/oder an der Oberfläche eines die Rotorwelle umgebenden weichmagnetischen Ringes Profilierungen ausgebildet. Diese Profilierungen dienen dazu, eine bessere Verbindung mit dem angegossenen Kunststoff zu schaffen. Besonders bevorzugt sind am Außenumfang der Rotorwelle Nuten eingebracht, beispielsweise in eine Keramikwelle eingeschliffen. Dabei sind die Nuten vorzugsweise so angebracht, dass sie sich zumindest teilweise schräg zur Umfangsrichtung erstrecken, so dass eine Kraftübertragung durch formschlüssigen Eingriff in Umfangsrichtung und axialer Richtung möglich ist, um den Kunststoff so formschlüssig in beiden Richtungen an der Welle zu fixieren. Sofern ein weichmagnetischer Ring die Rotorwelle umgebend angeordnet ist, so sind vorzugsweise entsprechende Nuten auch am Außenumfang und/oder am Innenumfang des Ringes ausgebildet. Auch dabei sind vorzugsweise Nuten vorgesehen, welche sich bevorzugt geneigt zur Umfangsrichtung erstrecken. Idealerweise sind sowohl Nuten vorgesehen, welche sich in Umfangsrichtung erstrecken sowie Nuten, welche sich schräg erstrecken. Entsprechende Nuten können auch am Innenumfang des Mantels ausgebildet sein. Sofern sich schräg zur Umfangsrichtung erstreckende Nuten an einer der genannten Oberflächen ausgebildet sind, so sind diese vorzugsweise so ausgebildet, dass zumindest zwei Nuten vorgesehen sind, welche in entgegengesetzten Richtungen geneigt verlaufen. So kann eine Verspannung zwischen Kunststoff und dem mit den Nuten versehenen Bauteil erreicht werden. Anstelle von Nuten könnten auch entsprechend geformte Vorsprünge oder eine andere geeignete Profilierung, welche einen formschlüssigen Eingriff zu dem Kunststoff gewährleistet, ausgebildet sein.

Gegenstand der Erfindung ist neben dem Rotor ein Elektromotor, welcher einen Rotor gemäß der vorangehenden Beschreibung aufweist. Dabei handelt es sich insbesondere um einen nasslaufenden Elektromotor, d. h. um einen Spaltrohrmotor. Gegenstand der Erfindung ist darüber hinaus ein Pumpenaggregat mit einem solchen Elektromotor. Bei diesem Pumpenaggregat kann es sich beispielsweise um ein Umwälzpumpenaggregat, insbesondere ein Heizungsumwälzpumpenaggregat, handeln. Der vorangehend beschriebene Rotor weist gerade in einem solchen Pumpenaggregat Vorteile auf, da er kostengünstig herzustellen ist, starke magnetische Eigenschaften aufweist und darüber hinaus bevorzugt eine vollständige Kapselung des korrosionsempfindlichen Magnetmaterials durch den umgebenden Mantel, die Deckscheiben und den innenliegenden weichmagnetischen Ring bzw. die Rotorwelle ermöglicht. So kann der Rotor gut in einem nasslaufenden Elektromotor, wie er bei Antriebsmotoren von Pumpenaggregaten verwendet wird, eingesetzt werden.

Darüber hinaus ist Gegenstand der Erfindung ein Verfahren zum Herstellen eines Rotors für einen Elektromotor, insbesondere eines Rotors, wie er vorangehend beschrieben wurde. Das erfindungsgemäße Verfahren weist folgende Schritte auf:
In einem Schritt des Verfahrens wird ein später im Rotor die Rotorwelle radial beabstandet umgebender Mantel in ein Spritzgusswerkzeug eingesetzt, wobei im Werkzeug am Innenumfang des Mantels, welcher später der Rotorwelle zugewandt ist, ein erster Ringraum gebildet wird.

Im nächsten Schritt wird in diesen Ringraum ein zuvor mit Magnetpartikeln versetzter Kunststoff eingespritzt. Dabei kommt der Kunststoff vorzugsweise direkt am Innenumfang des Mantels zur Anlage und stellt mit dem Mantel eine feste Verbindung her. Gemäß der ersten bevorzugten Ausführungsform wird die Rotorwelle gleichzeitig mit dem Mantel in ein Spritzgusswerkzeug eingelegt und es erstreckt sich der erste Ringraum vom Außenumfang der Rotorwelle bis zum Innenumfang des Mantels. Dieser Ringraum wird dann vollständig mit dem mit Magnetpartikeln versetzten Kunststoff ausgefüllt.

Erfindungsgemäß wird gemeinsam mit der Rotorwelle ein die Rotorwelle beabstandet umgebender weichmagnetischer Ring in ein Spritzgusswerkzeug eingelegt, so dass zwischen dem Ring und der Rotorwelle ein zweiter Ringraum gebildet wird. Dieser zweite Ringraum wird mit einem Kunststoff ausgegossen. Dabei kann es sich um einen Kunststoff ohne Magnetpartikel handeln. Zwischen dem Außenumfang des weichmagnetischen Ringes und dem Mantel wird der erste Ringraum, welcher vorangehend beschrieben
wurde, gebildet, welcher mit dem mit Magnetpartikeln versetzten Kunststoff ausgegossen wird. Das Ausgießen des ersten und des zweiten Ringraumes kann gleichzeitig geschehen. Vorzugsweise geschieht dies jedoch schrittweise, so dass zuerst der zweite Ringraum zwischen dem weichmagnetischen Ring und der Rotorwelle ausgegossen wird und in einem zweiten Schritt der erste Ringraum zwischen dem weichmagnetischen Ring und dem Mantel ausgegossen wird. Alternativ können auch zunächst der weichmagnetische Ring und der Mantel so in ein Spritzgusswerkzeug eingelegt werden, dass zwischen ihnen der erste Ringraum ausgebildet wird und dieser erste Ringraum dann mit dem mit Magnetpartikeln versetzten Kunststoff ausgegossen wird. Diese so vorgefertigte Baugruppe kann dann gemeinsam mit einer Rotorwelle in ein Spritzgusswerkzeug eingelegt werden, wobei dann der zweite Ringraum zwischen dem weichmagnetischen Ring und der Rotorwelle wie beschrieben mit Kunststoff ausgegossen wird. Ein solches Gießen in zwei Schritten hat den Vorteil, dass zwei unterschiedliche Kunststoffe verwendet werden können, einmal ein Kunststoff ohne Magnetpartikel und einmal der Kunststoff mit Magnetpartikeln zum Ausfüllen des ersten Ringraumes. Das Ausgießen des ersten und des zweiten Ringraumes kann entweder in demselben Spritzgusswerkzeug erfolgen, wobei gegebenenfalls Kerne verwendet werden, welche die im jeweiligen Schritt nicht auszugießenden Räume verschließen, oder es können zwei verschiedene Werkzeuge verwendet werden und es kann die in dem ersten Werkzeug vorgefertigte Baugruppe dann zum Ausgießen des jeweils anderen Ringraumes in ein zweites Werkzeug eingelegt werden. Wenn nur ein Werkzeug verwendet wird, kann vorzugsweise der Mantel erst nach dem Ausgießen des zweiten Ringraumes zwischen dem weichmagnetischen Ring und der Rotorwelle in das Werkzeug eingesetzt werden. So kann beim Ausgießen des zweiten Ringraumes in einem ersten Schritt zunächst der umgebende Raum des weichmagnetischen Ringes durch ein Formteil wie ein Kern gefüllt sein, welcher dann zum Gießen des ersten Ringraumes entnommen bzw. verschoben wird, um diesen Ringraum zu bilden.

Das Werkzeug ist vorzugsweise so ausgebildet, dass der Mantel sich um ein gewisses Maß elastisch oder plastisch in radialer Richtung ausdehnen kann, um eine Vorspannung zu erzeugen, wie sie oben beschrieben wurde.

Besonders bevorzugt ist das Werkzeug so ausgebildet, dass alle einzugießenden Komponenten in einem Arbeitsgang zu Beginn des Fertigungsvorganges in das Werkzeug eingelegt werden können, d. h. die Rotorwelle, der weichmagnetische Ring und der Mantel werden vorzugsweise vor dem ersten Ausgießen des zweiten Ringraumes in das Spritzgusswerkzeug eingelegt.

Die oben beschriebenen Deckscheiben werden weiter bevorzugt nach dem Gießen angebracht und dann mit dem Mantel und der Rotorwelle bzw. mit dem Mantel und dem weichmagnetischen Ring verschweißt. Ferner wird auch die Magnetisierung zur Ausbildung der permanentmagnetischen Pole in dem Rotorkörper vorzugsweise nach dem vollständigen Gießen des Rotorkörpers vorgenommen.

Nachfolgend wird die Erfindung beispielhaft anhand der beigefügten Figuren beschrieben. In diesen zeigt:

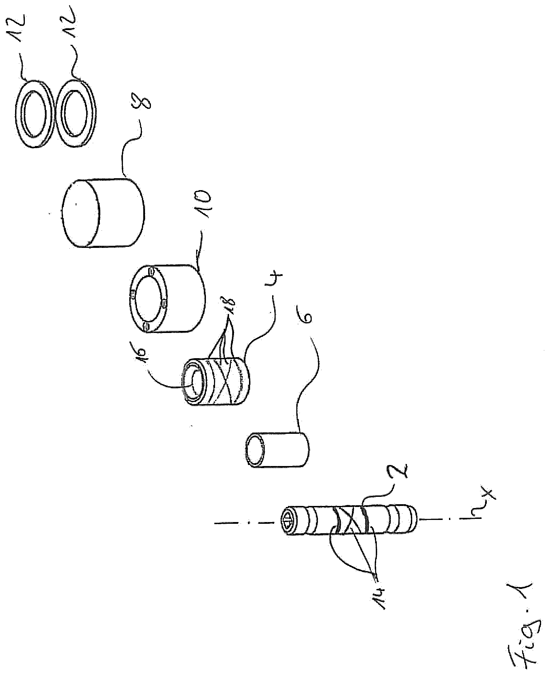

- Fig. 1: eine Explosionsansicht des erfindungsgemäßen Rotors,

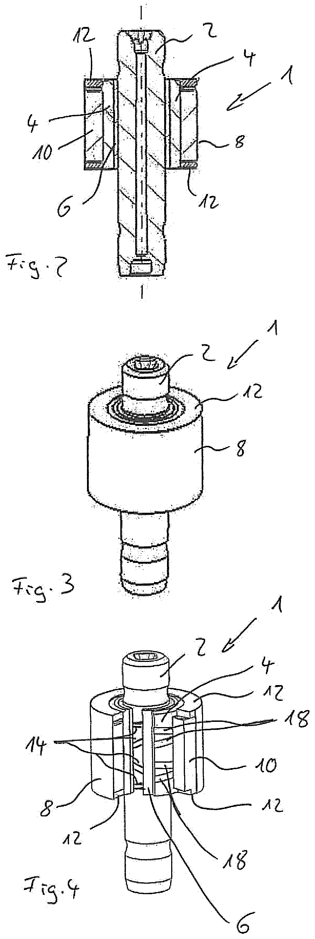

- Fig. 2: eine Schnittansicht des Rotors gemäß Fig. 1,
- Fig. 3: eine perspektivische Gesamtansicht des Rotors gemäß Fig. 1,
- Fig. 4: eine teilweise geschnittene perspektivische Ansicht des Rotors gemäß Fig. 1, und
- Fig. 5: ein Pumpenaggregat mit einem Rotor gemäß Fig. 1 - 4.

Der in den Figuren gezeigte Rotor 1 gemäß einer bevorzugten Ausführungsform der Erfindung weist eine zentrale Welle 2 aus einem Keramikmaterial auf. Radial beabstandet bezogen auf die Längsachse X der Welle 2 ist ein Eisenring 4 angeordnet. Dieser weichmagnetische Ring in Form des Eisenringes 4 ist radial so beabstandet, dass zwischen dem Innenumfang des Eisenringes 4, welcher sich konzentrisch zur Längsachse X erstreckt, und dem Außenumfang der Welle 2 ein Ringraum verbleibt. Dieser Ringraum ist durch einen Kunststoff 6 gefüllt. Der Kunststoff 6 wird im Spritzguss in den Freiraum zwischen dem Eisenring 4 und der Welle 2 eingebracht und verbindet den Eisenring 4 mit der Welle 2 stoff- bzw. formschlüssig.

Radial außerhalb des Eisenringes 4 ist ein Mantel 8 angeordnet. Dieser Mantel 8 ist aus Edelstahl ausgebildet und hat eine Hülsenform von kreiszylindrischer Gestalt. Der Innenumfang des Mantels 8 ist radial vom Außenumfang des Eisenringes 4 beabstandet, so dass zwischen dem Mantel 8 und dem Eisenring 4 ein Ringraum gebildet ist. Dieser Ringraum ist durch ein Kunststoffmaterial 10 mit eingebetteten Magnetpartikeln ausgefüllt. Der Kunststoff 10 mit den eingebetteten Magnetpartikeln, beispielsweise Neodympartikeln, wird in den Ringraum zwischen dem Mantel 8 und dem Eisenring 4 im Spritzguss eingegossen, so dass er gleichzeitig eine feste Verbindung zwischen dem Eisenring 4 und dem Mantel 8, beispielsweise durch Form- und/oder Stoffschluss herstellt. Beim Einspritzen des Kunststoffes 10 wird der Mantel 8 vorzugsweise in radialer Richtung aufgeweitet, so dass es zu einer elastischen Verformung kommt, welche zu einer radial nach innen gerichteten Vorspannung führt. Diese sorgt dafür, dass die einzelnen Schichten, nämlich der Mantel 8, der Kunststoff 10, der Eisenring 4 und der Kunststoff 6 fest an der Welle 2 gehalten werden, auch wenn der Kunststoff schrumpfen sollte.

Die Axialenden des so gebildeten Rotorkörpers sind durch zwei Deckscheiben 12 überdeckt, welche ebenfalls aus rostfreiem Stahl, wie der Mantel 8, gefertigt sind. Die Deckscheiben 12 haben eine ringförmige Gestalt mit einer Ringbreite, welche der Breite des ersten Ringraumes zwischen dem Eisenring 4 und dem Mantel 8 entspricht. So können die Deckscheiben 12 an ihrem Außenumfang mit dem Mantel 8 und an ihrem Innenumfang mit dem Eisenring 4 verschweißt werden, so dass der Kunststoff 10 mit den eingebetteten Magnetpartikeln vollständig im Inneren des ersten Ringraumes, welcher von dem Mantel 8, den Deckscheiben 12 und dem Eisenring 4 umschlossen wird, wasserdicht gekapselt ist. So wird das Magnetmaterial in dem Kunststoff 10 vor Korrosion geschützt. Alternativ wäre es auch denkbar, den Innenumfang der Deckscheiben 12 mit der Welle 2 zu verschweißen, z. B. wenn diese nicht aus Keramik sondern aus Metall gefertigt ist. In diesem Falle könnte möglicherweise auf den inneren Eisenring 4 und den Kunststoff 6 in dem zweiten Ringraum verzichtet werden, da dann der magnetische Fluss durch das Material der Welle 2 sichergestellt werden könnte. In diesem Fall könnte der erste Ringraum bis an den Außenumfang der Welle 2 heranreichen und sich der Kunststoff 10 bis an die Welle 2 heran erstrecken.

Bei der Fertigung werden vorzugsweise zunächst die Welle 2, der Eisenring 4 und der Mantel 8 in ein Spritzgusswerkzeug eingelegt, wobei das Spritzgusswerkzeug so ausgebildet ist, dass die Bauteile in definierter Lage zueinander gehalten werden. Anschließend wird vorzugsweise zuerst der Kunststoff 6 in den zweiten Ringraum zwischen der Welle 2 und dem Eisenring 4 eingespritzt. Anschließend wird in einem zweiten Schritt der Kunststoff 10 mit den Magnetpartikeln in den ersten Ringraum zwischen dem Eisenring 4 und dem Mantel 8 eingespritzt. Das Werkzeug ist dabei vorzugsweise so ausgebildet, dass der Mantel 8 sich in Umfangsrichtung bzw. radialer Richtung aufweiten kann, um die beschriebene Vorspannung zu erzeugen. Während des Spritzgießens des Kunststoffes 6 in dem zweiten Ringraum kann der erste Ringraum zwischen dem Eisenring 4 und dem Mantel 8 durch einen geeigneten Kern geschlossen sein. Alternativ kann das Spritzgießen auch in zwei Schritten in zwei Werkzeugen geschehen. So könnte in einem ersten Werkzeug zunächst der Mantel 8 mit dem Eisenring durch Ausgießen des zwischen diesen gebildeten ersten Ringraumes mit dem Kunststoff 10 miteinander verbunden bzw. vergossen werden. Diese so vorgefertigte Baugruppe kann dann in ein zweites Werkzeug gemeinsam mit der Rotorwelle 2 eingelegt werden, wobei dann der zwischen dem Eisenring 4 und der Rotorwelle 2 gebildete Ringraum durch den Kunststoff 6 vergossen werden kann, um den Eisenring 4 mit der Rotorwelle 2 fest zu verbinden.

Um eine bessere Verbindung zwischen dem Kunststoff 6 und der Welle 2 sowie dem Eisenring 4 zu erzielen, sind im Außenumfang der Welle 2 Nuten 14 und am Innenumfang des Eisenringes 4 Nuten 16 eingebracht. Die Nuten 14 können beispielsweise in den Außenumfang der Welle 2 eingeschliffen sein. Die Nuten 14 und 16 sorgen für einen formschlüssigen Eingriff des Kunststoffes 6 mit dem Eisenring 4 und der Welle 2. Die Nuten 14 und 16 weisen sowohl sich in Umfangsrichtung erstreckende Nuten als auch sich schräg zur Umfangsrichtung erstreckende Nuten auf. Dabei sind, wie am Beispiel der Welle 2 gezeigt, zwei sich kreuzende, schräg verlaufende Nuten vorgesehen, um eine Verspannung zwischen Kunststoff 6 und Welle 2 bzw. Eisenring 4 zu erreichen. Dabei erstrecken sich die Nuten 14 und 16 so, dass eine Kraftübertragung durch Formschluss sowohl in axialer als auch in Umfangsrichtung möglich ist. Zur Verbesserung der Verbindung des Kunststoffes 10 mit dem Eisenring 4 sind darüber hinaus am Außenumfang des Eisenringes 4 Nuten 18 ausgebildet. Diese erstrecken sich wie vorangehend anhand der Nuten 14 und 16 beschrieben ebenfalls in Umfangsrichtung und schräg zur Umfangsrichtung, so dass auch zwischen dem Kunststoff 10 und dem Eisenring 4 ein formschlüssiger Eingriff erreicht wird, welcher eine Kraftübertragung sowohl in axialer als auch in Umfangsrichtung ermöglicht.

Die Magnetisierung der Magnetpartikel in dem Kunststoff 10 erfolgt zu einem späteren Zeitpunkt, um dann definierte Magnetpole mit permanentmagnetischen Eigenschaften ausbilden zu können. Auch die Deckscheiben 12 werden nach dem Spritzgießen des Kunststoffes 10 in der beschriebenen Weise angeschweißt.

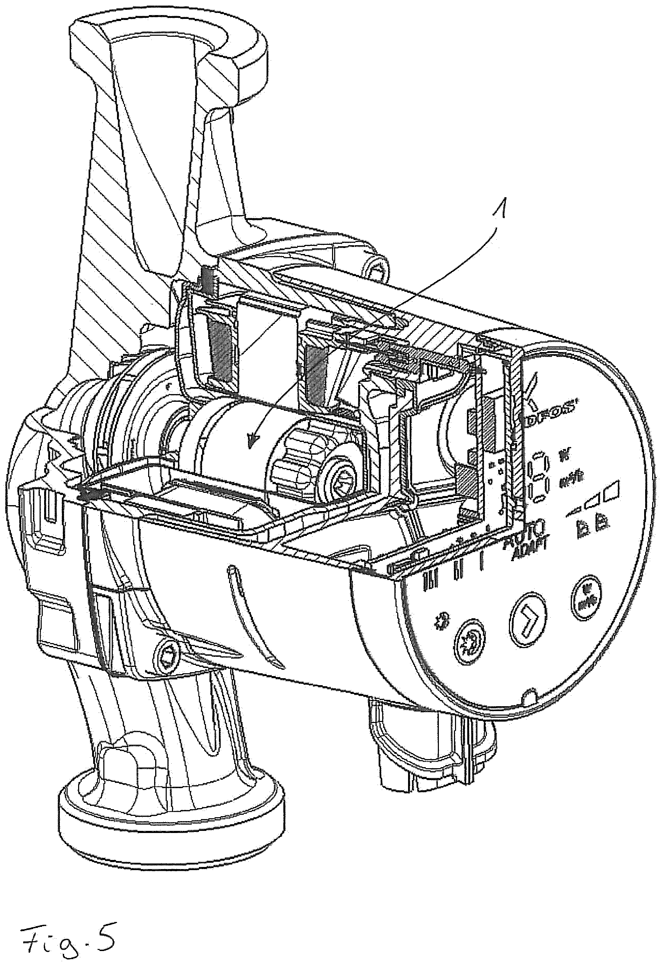

Fig. 5 zeigt ein Pumpenaggregat, dessen elektrischer Antriebsmotor einen Rotor 1, wie er vorangehend beschrieben wurde, enthält.

### Bezugszeichenliste

- 1: - Rotor
- 2: - Welle
- 4: - Eisenring
- 6: - Kunststoff
- 8: - Mantel
- 10: - Kunststoff
- 12: - Deckscheibe
- 14: - Nut
- 16: - Nut
- 18: - Nut
- X: - Längsachse

## Patentansprüche

1. Rotor für einen Elektromotor mit einer zentralen Rotorwelle (2) und einem an der Rotorwelle befestigten permanentmagnetischen Rotorkörper, wobei
der Rotorkörper einen radial von der Rotorwelle (2) beabstandeten Mantel (8) aufweist, und zwischen der Rotorwelle (2) und dem Mantel (8) ein an den Mantel (8) angrenzender erster Ringraum ausgebildet ist, **dadurch gekennzeichnet, dass** der erste Ringraum mit einem zumindest teilweise mit Magnetpartikeln versetzten Kunststoff (10) ausgegossen ist, die Rotorwelle (2) von einem weichmagnetischen Ring (4) umgeben ist, der erste Ringraum zwischen dem Außenumfang des weichmagnetischen Ringes (4) und dem Mantel (8) ausgebildet ist und dass zwischen dem weichmagnetischen Ring (4) und dem Außenumfang der Rotorwelle (2) ein zweiter Ringraum ausgebildet ist, welcher mit einem Kunststoff (6) ausgegossen ist.

2. Rotor nach Anspruch 1, **dadurch gekennzeichnet, dass** der Mantel (8) durch das Eingießen des Kunststoffes (10) elastisch und/oder plastisch verformt ist.

3. Rotor nach Anspruch 1 oder 2, **dadurch gekennzeichnet, dass** der Mantel (8) aus Metall und insbesondere rostfreiem Stahl gefertigt ist.

4. Rotor nach einem der vorangehenden Ansprüche, **dadurch gekennzeichnet, dass** der Mantel (8) eine geschlossene Umfangsfläche aufweist.

5. Rotor nach einem der vorangehenden Ansprüche, **dadurch gekennzeichnet, dass** der weichmagnetische Ring (4) in Form eines Eisenringes ausgebildet ist.

6. Rotor nach einem der vorangehenden Ansprüche, **dadurch gekennzeichnet, dass** zumindest der erste Ringraum des Rotorkörpers an zumindest einer Axialseite, vorzugsweise an beiden Axialseiten, von einer Deckscheibe (12) überdeckt ist.

7. Rotor nach Anspruch 6, **dadurch gekennzeichnet, dass** die Deckscheibe (12) aus Metall ist.

8. Rotor nach Anspruch 6 oder 7, **dadurch gekennzeichnet, dass** die Deckscheibe (12) mit dem Mantel (8), der Rotorwelle (2) und/oder einem die Rotorwelle (2) umgebenden weichmagnetischen Ring (4) verbunden, insbesondere verschweißt ist.

9. Rotor nach einem der vorangehenden Ansprüche, **dadurch gekennzeichnet, dass** die Magnetpartikel Ferrit oder Neodym enthalten.

10. Rotor nach einem der vorangehenden Ansprüche, **dadurch gekennzeichnet, dass** die Rotorwelle (2) aus Keramik gefertigt ist.

11. Rotor nach einem der vorangehenden Ansprüche, **dadurch gekennzeichnet, dass** der Außenumfang der Rotorwelle (2), der Innenumfang des Mantels (8) und/oder ein die Rotorwelle (2) umgebender weichmagnetischer Ring (4) an ihrer Oberfläche eine Profilierung aufweisen.

12. Elektromotor **gekennzeichnet durch** einen Rotor gemäß einem der vorangehenden Ansprüche.

13. Pumpenaggregat **gekennzeichnet durch** einen als Elektromotor nach Anspruch 12 ausgebildeten Antriebsmotor.

14. Verfahren zum Herstellen eines Rotors für einen Elektromotor mit folgenden Schritten:
- Einlegen eines eine Rotorwelle (2) radial beabstandet umgebenden Mantels (8) in ein Spritzgusswerkzeug, so dass angrenzend an den Mantel (8) an dessen der Rotorwelle (2) zugewandter Innenseite ein erster Ringraum gebildet wird,
- Einspritzen eines mit Magnetpartikeln versetzten Kunststoffes (10) in den ersten Ringraum, wobei mit der Rotorwelle (2) ein die Rotorwelle (2) beabstandet umgebender weichmagnetischer Ring (4) in ein Spritzgusswerkzeug eingelegt wird, und zwischen dem Ring (4) und der Rotorwelle (2) ein zweiter Ringraum gebildet wird, welcher mit einem Kunststoff (6) ausgegossen wird, und wobei zwischen dem Außenumfang des weichmagnetischen Ringes (4) und dem Mantel (8) der erste Ringraum ausgebildet wird, welcher mit dem mit Magnetpartikeln versetzten Kunststoff (10) ausgegossen wird.

15. Verfahren nach Anspruch 14, **dadurch gekennzeichnet, dass** zuerst der zweite Ringraum ausgegossen und in einem zweiten Schritt der erste Ringraum ausgegossen wird.

16. Verfahren nach Anspruch 14 oder 15, **dadurch gekennzeichnet, dass** die Rotorwelle (2), der weichmagnetische Ring (4) und der Mantel (8) vor dem Ausgießen des zweiten Ringraumes in das Spritzgusswerkzeug eingelegt werden.

## Claims

1. A rotor for an electric motor with a central rotor shaft (2) and with a permanent-magnetic rotor body fastened on the rotor shaft, wherein
the rotor body comprises a casing (8) which is radially distanced to the rotor shaft (2), and a first annular space which is adjacent the casing (8) is formed between the rotor shaft (2) and the casing (8), **characterised in that** the first annular space is moulded out with a plastic (10) at least partly containing magnet particles, the rotor shaft (2) is surrounded by a soft-magnetic ring (4), the first annular space is formed between the outer periphery of the soft-magnetic ring (4) and the casing (8) and that a second annular space which is moulded out with a plastic (6) is formed between the soft-magnetic ring (4) and the outer periphery of the rotor shaft (2).

2. A rotor according to claim 1, **characterised in that** the casing (8) is elastically and/or plastically deformed by way of the moulding-in of the plastic (10).

3. A rotor according to claim 1 or 2, **characterised in that** the casing (8) is manufactured of metal and in particular of stainless steel.

4. A rotor according to one of the preceding claims, **characterised in that** the casing (8) has a closed peripheral surface.

5. A rotor according to one of the preceding claims, **characterised in that** the soft magnetic ring (4) is formed as an iron ring.

6. A rotor according to one of the preceding claims, **characterised in that** at least the first annular space of the rotor body, on at least one axial side, preferably on both axial sides, is covered by a shroud (12).

7. A rotor according to claim 6, **characterised in that** the shroud (12) is of metal).

8. A rotor according to claim 6 or 7, **characterised in that** the shroud (12) is connected, in particular welded, to the casing (8), to the rotor shaft (2) and/or to a soft-magnetic ring (4) surrounding the rotor shaft (2).

9. A rotor according to one of the preceding claims, **characterised in that** the magnet particles contain ferrite or neodymium.

10. A rotor according to one of the preceding claims, **characterised in that** the rotor shaft (2) is manufactured from ceramic.

11. A rotor according to one of the preceding claims, **characterised in that** the outer periphery of the rotor shaft (2), the inner periphery of the casing (8) and/or a soft-magnetic ring (4) surrounding the rotor shaft (2) have a profiling on their surface.

12. An electric motor **characterised by** a rotor according to one of the preceding claims.

13. A pump assembly **characterised by** a drive motor designed as an electric motor according to claim 12.

14. A method for manufacturing a rotor for an electric motor, with the following steps:
- applying a casing (8) surrounding a rotor shaft (2) in a radially distanced manner, into an injection moulding tool, so that a first annular space is formed adjacent the casing (8) on its inner side facing the rotor shaft (2),
- injecting a plastic (10) containing magnet particles into the first annular space., wherein
a soft-magnetic ring (4) surrounding the rotor shaft (2) at a distance is applied with the rotor shaft (2) into an injection moulding tool, and
a second annular space which is moulded out with a plastic (6) is formed between the ring (4)
wherein
the rotor shaft (2) and that the first annular space which is moulded out with the plastic (10) containing magnet particles is formed between the outer periphery of the soft-magnetic ring (4) and the casing (8).

15. A method according to 14, **characterised in that** firstly the second annular space is moulded out and in a second step the first annular space is moulded out.

16. A method according to claim 14 or 15, **characterised in that** the rotor shaft (2), the soft-magnetic ring (4) and the casing (8) are applied into the injection moulding tool before moulding out the second annular space.

## Revendications

1. Rotor pour un moteur électrique avec un arbre de rotor central (2) et un corps de rotor à aimant permanent fixé sur l'arbre de rotor, le corps de rotor comprenant une enveloppe (8) radialement espacée de l'arbre de rotor (2) et un premier espace annulaire adjacent à l'enveloppe (8) étant formé entre l'arbre de rotor (2) et l'enveloppe (8), **caractérisé en ce que** le premier espace annulaire est rempli, par coulage, d'une matière synthétique (10) comportant au moins partiellement des particules d'aimant, que l'arbre de rotor (2) est entouré d'un anneau magnétique doux (4), que le premier espace annulaire est formé entre le pourtour extérieur de l'anneau magnétique doux (4) et l'enveloppe (8) et qu'il est formé entre l'anneau magnétique doux (4) et le pourtour extérieur de l'arbre de rotor (2) un deuxième espace annulaire qui est rempli, par coulage, d'une matière synthétique (6).

2. Rotor selon la revendication 1, **caractérisé en ce que** l'enveloppe (8) est déformé élastiquement et/ou plastiquement par le coulage de la matière synthétique (10).

3. Rotor selon la revendication 1 ou 2, **caractérisé en ce que** l'enveloppe (8) est réalisé en métal et notamment en acier inoxydable.

4. Rotor selon l'une des revendications précédentes, **caractérisé en ce que** l'enveloppe (8) présente une surface de pourtour fermée.

5. Rotor selon l'une des revendications précédentes, **caractérisé en ce que** l'anneau magnétique doux (4) se présente sous la forme d'un anneau en fer.

6. Rotor selon l'une des revendications précédentes, **caractérisé en ce qu'**au moins le premier espace annulaire du corps de rotor est recouvert au moins sur un côté axial, de préférence sur les deux côtés axiaux, d'un disque de couverture (12).

7. Rotor selon la revendication 6, **caractérisé en ce que** le disque de couverture (12) est en métal.

8. Rotor selon la revendication 6 ou 7, **caractérisé en ce que** le disque de couverture (12) est attaché, notamment soudé, à l'enveloppe (8), à l'arbre de rotor (2) et/ou à un anneau magnétique doux (4) entourant l'arbre de rotor (2).

9. Rotor selon l'une des revendications précédentes, **caractérisé en ce que** les particules d'aimant comprennent de la ferrite ou du néodyme.

10. Rotor selon l'une des revendications précédentes, **caractérisé en ce que** l'arbre de rotor (2) est réalisé en céramique.

11. Rotor selon l'une des revendications précédentes, **caractérisé en ce que** le pourtour extérieur de l'arbre de rotor (2), le pourtour intérieur de l'enveloppe (8) et/ou un anneau magnétique doux (4) entourant l'arbre de rotor (2) présentent à leur surfaces un profilage.

12. Moteur électrique **caractérisé par** un rotor selon l'une des revendications précédentes.

13. Groupe de pompes **caractérisé par** un moteur d'entraînement réalisé comme moteur électrique selon la revendication 12.

14. Procédé de réalisation d'un rotor pour un moteur électrique, avec les étapes suivantes:
- dépôt dans un outil de moulage par injection, une enveloppe (8) entourant un arbre de rotor (2) de manière radialement espacée, si bien qu'un premier espace annulaire soit formé adjacent à l'enveloppe (8) sur le côté intérieur orienté vers l'arbre de rotor (2),
- injection d'une matière synthétique (10) comportant des particules d'aimant, dans le premier espace annulaire,
un anneau magnétique doux (4) entourant l'arbre de rotor (2) de manière espacée étant déposé dans l'outil de moulage par injection, ensemble avec l'arbre de rotor (2), et un deuxième espace annulaire étant formé entre l'anneau (4) et l'arbre de rotor (2), qui est rempli, par coulage, d'une matière synthétique (6), et
étant formé entre le pourtour extérieur de l'anneau magnétique doux (4) et l'enveloppe (8), le premier espace annulaire qui est rempli, par coulage de matière synthétique (10) comportant des particules d'aimant.

15. Procédé selon la revendication 14, **caractérisé en ce qu'**est coulé d'abord le deuxième espace annulaire et, en une deuxième étape, le premier espace annulaire.

16. Procédé selon la revendication 14 ou 15, **caractérisé en ce que** l'arbre de rotor (2), l'anneau magnétique doux (4) et l'enveloppe (8) sont déposés dans l'outil de moulage par injection avant le coulage du deuxième espace annulaire.
